# EUROPEAN PATENT APPLICATION

(11) **EP 4 443 343 A1**
(43) Date of publication of application: **09.10.2024**
(21) Application number: 21966304.4
(22) Date of filing: 30.11.2021
(51) Int. Cl.: G06N 10/40

(54) **QUANTUM DEVICE, QUANTUM COMPUTATION APPARATUS, AND QUANTUM COMPUTATION METHOD**

(71) Applicant: FUJITSU LIMITED, Kawasaki-shi, Kanagawa 211-8588 (JP)
(72) Inventor: IWAI, Toshiki, Kawasaki-shi, Kanagawa 211-8588 (JP); DOI, Yoshiyasu, Kawasaki-shi, Kanagawa 211-8588 (JP); KAWAGUCHI, Kenichi, Kawasaki-shi, Kanagawa 211-8588 (JP); ISHIGURO, Tetsuro, Kawasaki-shi, Kanagawa 211-8588 (JP); MIYATAKE, Tetsuya, Kawasaki-shi, Kanagawa 211-8588 (JP); SATO, Shintaro, Kawasaki-shi, Kanagawa 211-8588 (JP)
(74) Representative: Hoffmann Eitle
(86) International application number: PCT/JP2021/043763
(87) International publication number: WO 2023/100217

(57) **Abstract**

A quantum device includes a first quantum bit including a first electron spin and a first nuclear spin; a second quantum bit including a second electron spin; a first entanglement unit for generating a quantum entanglement state in the first electron spin and the first nuclear spin through dynamical decoupling, by irradiating the first quantum bit with a first high-frequency electromagnetic wave pulse; a first photon generation unit for generating, by irradiating the first quantum bit with light, a first photon being a photon to which a spin state of the first electron spin is reflected; a second photon generation unit for generating, by irradiating the second quantum bit with light, a second photon being a photon to which the spin state of the second electron spin is reflected; and a second entanglement unit for generating the quantum entanglement state in the first photon and the second photon.

## Description

### FIELD

The present disclosure relates to a quantum device, a quantum computing device, and a quantum computing method.

### BACKGROUND

As one of next-generation computing, a quantum computer has been researched and developed. For example, a method has been proposed in which a color center in diamond is used as a quantum bit and quantum computing is performed between two quantum bits. Meanwhile, in addition, a method has been proposed in which a coherence time is extended by dynamical decoupling between a nuclear spin and an electron spin in diamond.

### SUMMARY

### TECHNICAL PROBLEM

According to the existing techniques, it is not possible to obtain good fidelity in a quantum entanglement state while extending the coherence time.

An object of the present disclosure is to provide a quantum device, a quantum computing device, and a quantum computing method capable of obtaining good fidelity in a quantum entanglement state while extending a coherence time.

### SOLUTION TO PROBLEM

According to an aspect of the present disclosure, there is provided a quantum device that includes: a first quantum bit that includes a first electron spin and a first nuclear spin; a second quantum bit that includes a second electron spin; a first entanglement unit configured to generate a quantum entanglement state in the first electron spin and the first nuclear spin through dynamical decoupling, by irradiating the first quantum bit with a first high-frequency electromagnetic wave pulse; a first photon generation unit configured to generate a first photon by irradiating the first quantum bit with light, the first photon being a photon to which a spin state of the first electron spin is reflected; a second photon generation unit configured to generate a second photon by irradiating the second quantum bit with light, the second photon being a photon to which the spin state of the second electron spin is reflected; and a second entanglement unit configured to generate the quantum entanglement state in the first photon and the second photon.

### ADVANTAGEOUS EFFECTS OF INVENTION

According to the present disclosure, it becomes possible to obtain good fidelity in a quantum entanglement state while extending a coherence time.

### BRIEF DESCRIPTION OF DRAWINGS

FIG. 1 is a top view illustrating a quantum device according to a first embodiment.
FIG. 2 is a cross-sectional view illustrating the quantum device according to the first embodiment.
FIG. 3 is a diagram illustrating a configuration of a quantum circuit corresponding to the quantum device according to the first embodiment.
FIG. 4 is a diagram illustrating a configuration of a quantum circuit corresponding to a quantum device according to a second embodiment.
FIG. 5 is a diagram illustrating a configuration of a quantum circuit corresponding to a quantum device according to a third embodiment.
FIG. 6 is a diagram illustrating a quantum computer according to a fourth embodiment.

### DESCRIPTION OF EMBODIMENTS

Hereinafter, embodiments of the present disclosure will be specifically described with reference to the accompanying drawings. Note that, in the present specification and drawings, components having substantially the same functional configuration may be denoted by the same reference sign to omit redundant descriptions. In the present disclosure, an X1-X2 direction and a Y1-Y2 direction are assumed to be directions orthogonal to each other.

### (First Embodiment)

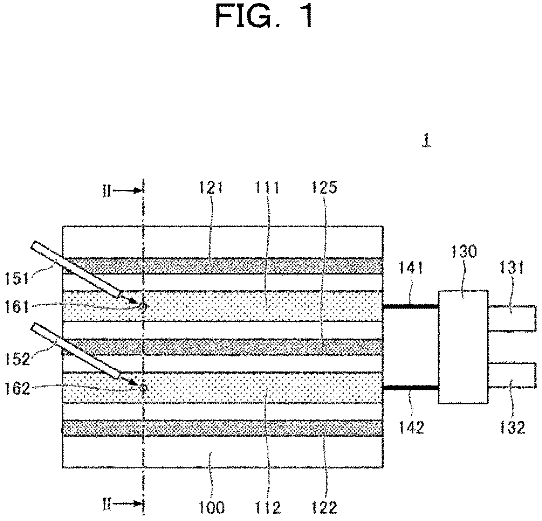

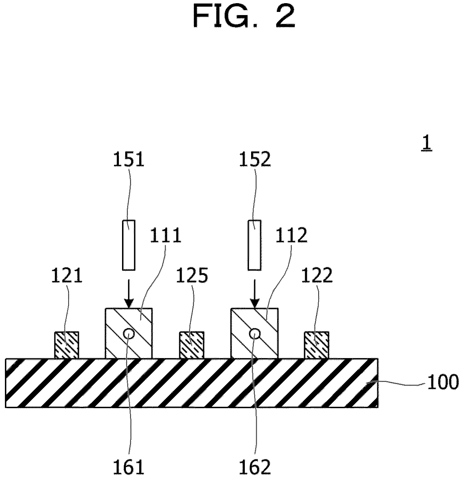

First, a first embodiment will be described. The first embodiment relates to a quantum device. The quantum device according to the first embodiment is used for a quantum computing device, such as a quantum computer or the like. FIG. 1 is a top view illustrating the quantum device according to the first embodiment. FIG. 2 is a cross-sectional view illustrating the quantum device according to the first embodiment. FIG. 2 corresponds to a cross-sectional view taken along line II-II in FIG. 1.

As illustrated in FIGs. 1 and 2, a quantum device 1 according to the first embodiment includes a substrate 100, an optical waveguide 111, an optical waveguide 112, a signal line 121, a ground line 125, and a signal line 122. The quantum device 1 further includes a beam splitter 130, a photodetector 131, a photodetector 132, an optical fiber 141, an optical fiber 142, a light irradiation unit 151, and a light irradiation unit 152.

The optical waveguide 111, the optical waveguide 112, the signal line 121, the ground line 125, and the signal line 122 are provided over the substrate 100, and extend in parallel to each other. The ground line 125 is provided between the signal line 121 and the signal line 122. The optical waveguide 111 is provided between the signal line 121 and the ground line 125. The optical waveguide 112 is provided between the signal line 122 and the ground line 125.

Examples of the signal line 121, the ground line 125, and the signal line 122 include a metallic line. Examples of a material of the signal line 121, the ground line 125, and the signal line 122 include Al, Cu, Au, and the like.

The optical waveguide 111 includes a diamond waveguide, and includes a diamond color center 161. The optical waveguide 112 includes a diamond waveguide, and includes a diamond color center 162. Examples of the color centers 161 and 162 include a nitrogen-vacancy center (NV center) including nitrogen and a vacancy. The color centers 161 and 162 may be a silicon-vacancy center (SiV center) including silicon and a vacancy, a germanium-vacancy center (GeV center) including germanium and a vacancy, a tin-vacancy center (SnV center) including tin and a vacancy, a lead-vacancy center (PbV center) including lead and a vacancy, or a boron-vacancy center (BV center) including boron and a vacancy. A color center of other than diamond may be used. For example, silicon carbide (SiC), boron nitride (BN), or the like may be used.

The optical waveguides 111 and 112 may include a diamond waveguide, and a waveguide of a material that is optically coupled to the diamond waveguide and transmits visible light, such as oxide silicon, aluminum oxide, or the like.

For example, the optical waveguide 111 is optically coupled to the beam splitter 130 via the optical fiber 141, and the optical waveguide 112 is optically coupled to the beam splitter 130 via the optical fiber 142. The beam splitter 130 includes, for example, a diamond photonic crystal. A waveguide of oxide silicon, aluminum oxide, or the like may be used instead of the optical fibers 141 and 142.

The photodetector 131 and the photodetector 132 are optically coupled to the beam splitter 130. The photodetectors 131 and 132 may be directly coupled to the beam splitter 130, or may be coupled via an optical waveguide or an optical fiber. Examples of the photodetectors 131 and 132 include a single photon detector.

The light irradiation unit 151 irradiates the color center 161 with light, and the light irradiation unit 152 irradiates the color center 162 with light. The light irradiation unit 151 emits laser light via a confocal microscope, emits laser light from a fiber end face via an optical fiber, or emits laser light via an optical fiber and an optical waveguide.

In the quantum device 1 configured as described above, the color center 161 functions as a first quantum bit, and the color center 162 functions as a second quantum bit.

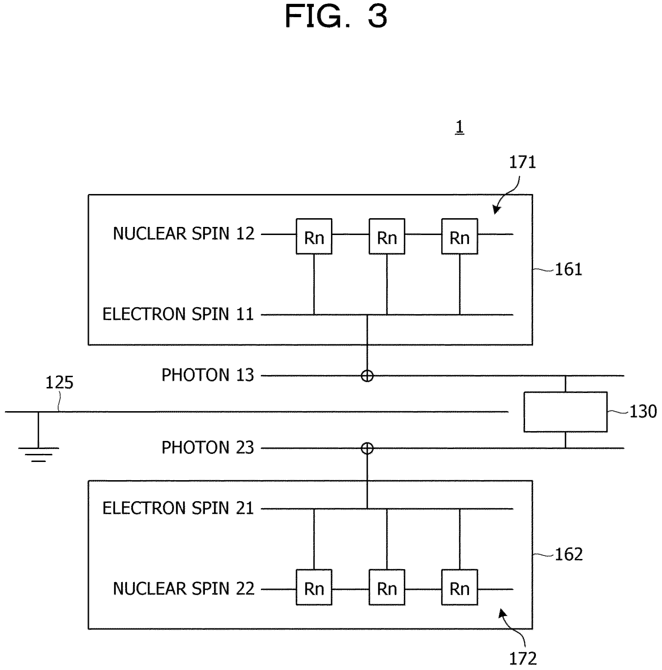

Next, a configuration of a quantum circuit corresponding to the quantum device 1 according to the first embodiment will be described. FIG. 3 is a diagram illustrating the configuration of the quantum circuit corresponding to the quantum device according to the first embodiment.

As illustrated in FIG. 3, the color center 161 includes an electron spin 11 and a nuclear spin 12, and the color center 162 includes an electron spin 21 and a nuclear spin 22. The electron spin 11 is an example of a first electron spin, and the nuclear spin 12 is an example of a first nuclear spin. The electron spin 21 is an example of a second electron spin, and the nuclear spin 22 is an example of a second nuclear spin.

By irradiating the color center 161 with a radio frequency (RF) signal pulse 171 via the signal line 121, it becomes possible to generate a quantum entanglement state in the first electron spin 11 and the first nuclear spin 12 by dynamical decoupling. Furthermore, by irradiating the color center 162 with an RF signal pulse 172 via the signal line 122, it becomes possible to generate a quantum entanglement state in the second electron spin 21 and the second nuclear spin 22 by dynamical decoupling. The signal line 121 is an example of a first entanglement unit, and the signal line 122 is an example of a fourth entanglement unit. The RF signal pulse 171 is an example of a first high-frequency electromagnetic wave pulse, and the RF signal pulse 172 is an example of a second high-frequency electromagnetic wave pulse. Note that "Rₙ" in FIG. 3 represents a control gate rotated about an n-axis (n is any of x, y, and z).

Furthermore, when the light irradiation unit 151 irradiates the color center 161 with light, photons 13 are generated by light emission transition. When the light irradiation unit 152 irradiates the color center 162 with light, photons 23 are generated by light emission transition. When the photons 13 and 23 are generated simultaneously, the beam splitter 130 generates a quantum entanglement state in the photons 13 and 23. The light irradiation unit 151 is an example of a first photon generation unit, and the light irradiation unit 152 is an example of a second photon generation unit. The beam splitter 130 is an example of a second entanglement unit.

At a time of performing quantum computing using the quantum device 1, the color center 161 is irradiated with the RF signal pulse 171 to generate a quantum entanglement state in the first electron spin 11 and the first nuclear spin 12 by dynamical decoupling.

Next, the light irradiation unit 151 irradiates the color center 161 with green light, red light, or both of them, and the light irradiation unit 152 irradiates the color center 162 with green light to perform initialization. Next, the light irradiation unit 151 and the light irradiation unit 152 irradiates the color centers 161 and 162 with red light, respectively, and the photodetectors 131 and 132 detect the photons 13 and 23 via the beam splitter 130. This operation is performed until an entangled state (superposed state) is generated. Note that the green light and the red light are suitable for the NV center, and light of another color may be used when another color center is used.

Furthermore, the light irradiation unit 151 irradiates the color center 161 with red light and the light irradiation unit 152 irradiates the color center 162 with red light at timing not affected by the dynamical decoupling. The timing not affected by the dynamical decoupling is, for example, the Nth timing when a phase is changed by 2n/N for the dynamical decoupling.

In this manner, it becomes possible to obtain good fidelity in the quantum entanglement state between the color center 161 as an example of the first quantum bit and the color center 162 as an example of the second quantum bit while extending a coherence time by the dynamical decoupling.

Furthermore, since the ground line 125 is provided between the signal line 121 and the optical waveguide 112, the color center 162 is shielded from the signal line 121 by the ground line 125. Therefore, even when a distance between the color center 161 and the color center 162 is small, the color center 162 is less susceptible to the RF signal pulse 171. Likewise, the color center 161 is less susceptible to the RF signal pulse 172 emitted from the signal line 122 to the color center 162. The ground line 125 is an exemplary shielding member.

### (Second Embodiment)

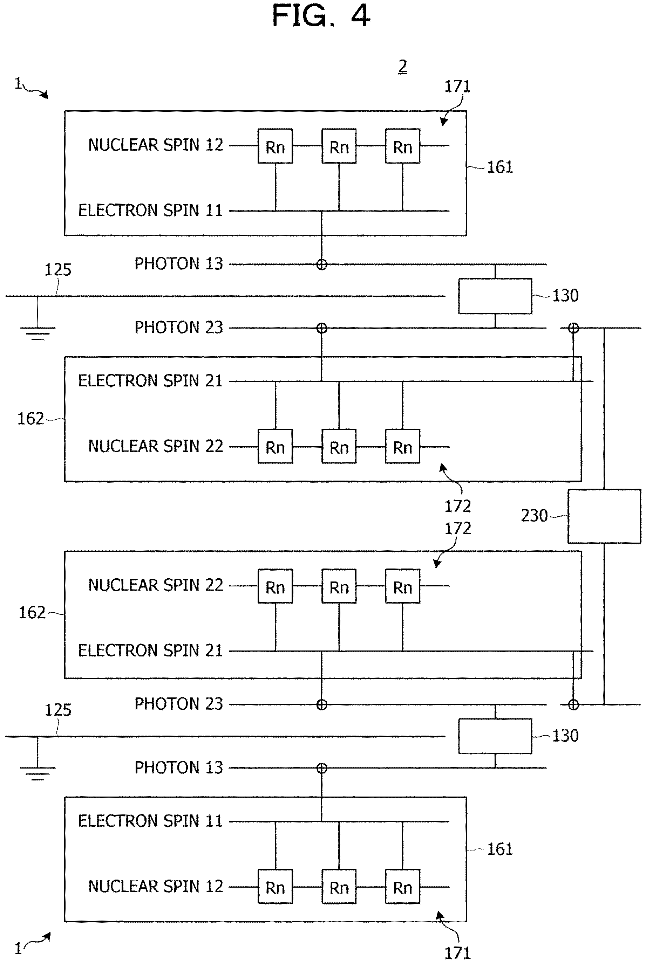

Next, a second embodiment will be described. FIG. 4 is a diagram illustrating a configuration of a quantum circuit corresponding to a quantum device according to the second embodiment.

A quantum device 2 according to the second embodiment includes two combinations of an optical waveguide 111, an optical waveguide 112, a signal line 121, a ground line 125, a signal line 122, a beam splitter 130, a photodetector 131, a photodetector 132, an optical fiber 141, an optical fiber 142, a light irradiation unit 151, and a light irradiation unit 152. Therefore, as illustrated in FIG. 4, the quantum device 2 includes two combinations of color centers 161 and 162. The quantum device 2 further includes a beam splitter 230 that generates a quantum entanglement state between the two color centers 162. The beam splitter 230 is an example of a third entanglement unit.

Other components are similar to those of the first embodiment.

In the quantum device 2 configured as described above, for example, quantum computing is performed using two electron spins 21 via the beam splitter 230, and one of the electron spins 21 is measured at timing not affected by dynamical decoupling. By such processing being performed, quantum information of the one of the electron spins 21 is subject to quantum teleportation to an electron spin 11 included in the common combination with the one of the electron spins 21.

According to the second embodiment as well, it becomes possible to obtain good fidelity in the quantum entanglement state while extending a coherence time by the dynamical decoupling. Furthermore, a plurality of quantum bits may be integrated and arranged.

### (Third Embodiment)

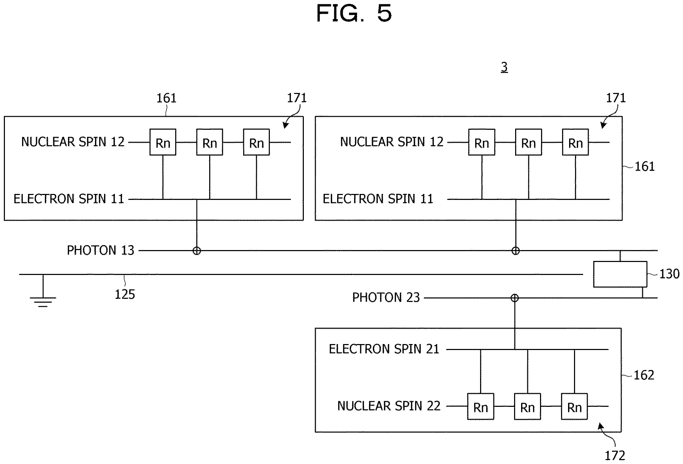

Next, a third embodiment will be described. FIG. 5 is a diagram illustrating a configuration of a quantum circuit corresponding to a quantum device according to the third embodiment.

In a quantum device 3 according to the third embodiment, as illustrated in FIG. 5, an optical waveguide 111 includes two color centers 161. Although illustration is omitted, a light irradiation unit 151 is provided for each of the color centers 161.

Other components are similar to those of the first embodiment.

According to the third embodiment as well, it becomes possible to obtain good fidelity in a quantum entanglement state while extending a coherence time by dynamical decoupling. Furthermore, a plurality of quantum bits may be integrated and arranged.

### (Fourth Embodiment)

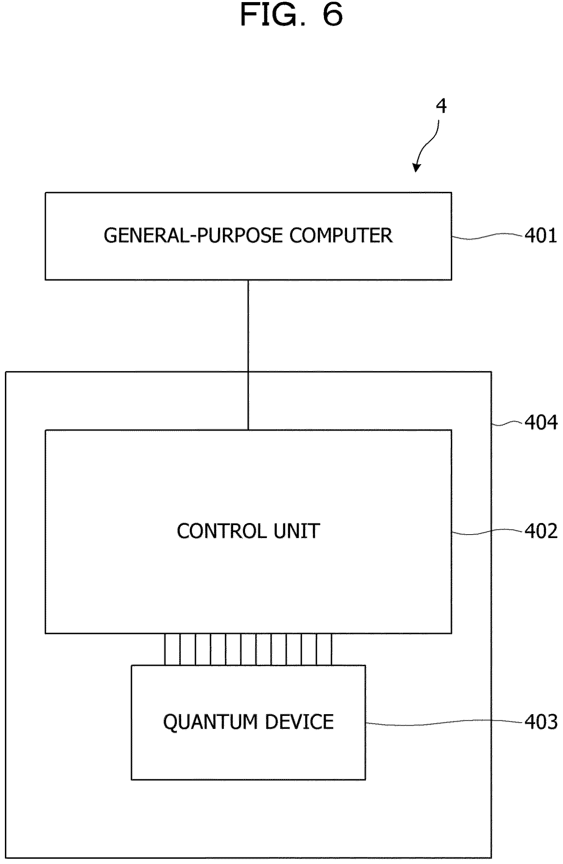

Next, a fourth embodiment will be described. The fourth embodiment relates to a quantum computer. FIG. 6 is a diagram illustrating the quantum computer according to the fourth embodiment.

A quantum computer 4 according to the fourth embodiment includes a general-purpose computer 401, a control unit 402, and a quantum device 403. The control unit 402 controls the quantum device 403 based on control signals from the general-purpose computer 401. A quantum device according to any one of the first to third embodiments is used as the quantum device 403. The control unit 402 and the quantum device 403 are housed in a cryostat 404.

According to the quantum computer 4, it becomes possible to perform stable quantum computing.

Although the preferred embodiments and the like have been described in detail above, it is not limited to the embodiments and the like described above, and various modifications and substitutions may be made to the embodiments and the like described above without departing from the scope described in claims.

### CITATION LIST

### PATENT DOCUMENT

Patent Document 1: Japanese National Publication of International Patent Application No. 2012-532475
Patent Document 2: Japanese Laid-open Patent Publication No. 2018-128857
Patent Document 3: Japanese Laid-open Patent Publication No. 3-107781

### REFERENCE SIGNS LIST

1, 2, 3, 403 quantum device
4 quantum computer
11, 21 electron spin
12, 22 nuclear spin
13, 23 photon
111, 112 optical waveguide
121, 122 signal line
125 ground line
130, 230 beam splitter
131, 132 photodetector
151, 152 light irradiation unit
161, 162 color center
171, 172 RF signal pulse

## Claims

1. A quantum device comprising:
a first quantum bit that includes a first electron spin and a first nuclear spin;
a second quantum bit that includes a second electron spin;
a first entanglement unit configured to generate a quantum entanglement state in the first electron spin and the first nuclear spin through dynamical decoupling, by irradiating the first quantum bit with a first high-frequency electromagnetic wave pulse;
a first photon generation unit configured to generate a first photon by irradiating the first quantum bit with light, the first photon being a photon to which a spin state of the first electron spin is reflected;
a second photon generation unit configured to generate a second photon by irradiating the second quantum bit with light, the second photon being a photon to which the spin state of the second electron spin is reflected; and
a second entanglement unit configured to generate the quantum entanglement state in the first photon and the second photon.

2. The quantum device according to claim 1, wherein:
the quantum device comprises a plurality of combinations of the first quantum bit, the second quantum bit, the first entanglement unit, the first photon generation unit, the second photon generation unit, and the second entanglement unit,
the quantum device further comprising:
a third entanglement unit that generates the quantum entanglement state in two of the second photons in which the quantum entanglement state is generated by the second entanglement unit.

3. The quantum device according to claim 1 or 2, wherein
the quantum device comprises a plurality of the first quantum bits, and
the first photon generation unit selectively irradiates one of the plurality of the first quantum bits with the light.

4. The quantum device according to any one of claims 1 to 3, wherein
the second entanglement unit includes a beam splitter.

5. The quantum device according to claim 4, wherein
the beam splitter includes a photonic crystal.

6. The quantum device according to any one of claims 1 to 5, wherein
the first quantum bit and the second quantum bit include a diamond color center.

7. The quantum device according to any one of claims 1 to 6, further comprising:
a shielding member that shields the second quantum bit from the first high-frequency electromagnetic wave pulse.

8. The quantum device according to any one of claims 1 to 7, wherein
the second quantum bit includes a second nuclear spin,
the quantum device further comprising a fourth entanglement unit that irradiates the second quantum bit with a second high-frequency electromagnetic wave pulse and generates the quantum entanglement state in the second electron spin and the second nuclear spin by the dynamical decoupling.

9. A quantum computing device comprising:
the quantum device according to any one of claims 1 to 8.

10. A quantum computing method of using a quantum device, wherein
the quantum device includes
a first quantum bit that includes a first electron spin and a first nuclear spin, and
a second quantum bit that includes a second electron spin, and
the quantum computing method comprises:
a process for generating a quantum entanglement state in the first electron spin and the first nuclear spin through dynamical decoupling, by irradiating the first quantum bit with a first high-frequency electromagnetic wave pulse;
a process for generating a first photon by irradiating the first quantum bit with light and generating a second photon by irradiating the second quantum bit with light, the first photon being a photon to which a spin state of the first electron spin is reflected, the second photon being a photon to which the spin state of the second electron spin is reflected; and
a process for generating the quantum entanglement state in the first photon and the second photon.
